# EUROPÄISCHE PATENTSCHRIFT

(11) **EP 0 807 581 B1**
(45) Veröffentlichungstag und Bekanntmachung des Hinweises auf die Patenterteilung: **02.10.2002**
(21) Anmeldenummer: 97111503.5
(22) Anmeldetag: 10.07.1994
(51) Int. Cl.: B65D 5/74

(54) **Fliessmittelverpackung mit Ausgiessvorrichtung und Verfahren zur Herstellung derselben**
Package with pouring device for fluid substances and process for manufacturing same
Emballage pour substances liquides pourvu d'un dispositif de déversement et son procédé de fabrication

(30) Priorität: 31.07.1993 DE 4325830
(43) Veröffentlichungstag der Anmeldung: 19.11.1997
(62) Teilanmeldung aus: 94924731.6
(73) Patentinhaber: Tetra Laval Holdings & Finance SA, 1009 Pully (CH)
(72) Erfinder: Huser, Pierre, Aurora, OntarioL4G 3GB (CA)
(74) Vertreter: Weber, Dieter, Dr.

(56) Entgegenhaltungen:
- EP-A- 0 342 729
- WO-A-92/00883
- WO-A-93/10967
- DE-A- 4 100 542
- US-A- 5 221 028

## Beschreibung

Die Erfindung betrifft eine Verpackung für Fließmittel mit wenigstens einem im wesentlichen ebenen Oberwandteilstück, das aus mit Kunststoff beschichtetem Trägermaterial, zum Beispiel Karton, besteht und in welchem eine Ausgießvorrichtung angebracht ist, die ein wenigstens ein Loch enthaltendes Unterteil und einen eine Verschließkappe enthaltenden Deckel aufweist, wobei ein Kragen das Loch außen umgibt, die Verschließkappe mit Innengewinde auf das Außengewinde des Kragens aufschraubbar ist und an dem packungsseitigen Ende des Kragens ein durch ein entsprechendes Loch in dem Oberwandteilstück zur Innenseite der Verpackung hindurchragender Bund angebracht ist, der zur Anbringung des Unterteils an dem Oberwandteilstück auf der Außen- und/oder auf der Innenfläche des Oberwandteilstücks angeschweißt ist.

Eine Fließmittelverpackung ähnlich der vorstehend genannten Art ist aus dem Dokument EP-A-0.342.729 bekannt. Die bekannte Ausgießvorrichtung mit Kragen, Bund und Deckel trägt aber mit Nachteil nicht nur stark auf in dem Sinne, daß der Kragen mit Deckel in senkrechter Richtung aus der Oberwand einer mit einer solchen Ausgießvorrichtung versehenden Verpackung weit heraussteht, sondern die bekannte Ausgießvorrichtung ist ohne besondere Maßnahmen auch nicht flüssigkeitsdicht. Diese Maßnahmen stellen eine Folie dar, die zum einen zusätzlich separat hergestellt, auf Lager gehalten und in einem besonderen Verfahrensschritt, zum Beispiel durch Wärmeaufsiegeln, auf dem Kragen befestigt werden muß.

Es sind auch schon Flüssigkeitspackungen mit einer aus drei Teilstücken gebildeten Oberwand bekannt, in der zum Beispiel in der Mitte eine flach umgelegte Längssiegelnaht eine Quersiegelnaht kreuzt. Zahlreiche Öffnungsvorrichtungen sind an solchen Packungen entwickelt und veröffentlicht worden. Es gibt Öffnungsvorrichtungen, die aus dem Bahnmaterial gebildet werden, z. B. durch Perforations- und Reißlinien, wobei diese zwar mehr oder weniger gut geöffnet, nicht aber ohne weiteres wiederverschlossen werden können, im allgemeinen nicht staubdicht und fast niemals flüssigkeitsdicht wiederverschlossen werden können. Es gibt auch andere Ausgießvorrichtungen, die durch Aufsiegeln von Aufreißstreifen gebildet werden, welche ein im Bahnmaterial der Verpackung ausgestanztes Loch überspannen und verschließen. Bei wieder anderen Vorrichtungen werden von der Innenseite Abdeckstreifen aufgesiegelt, so daß der äußere Aufreißstreifen durch das Loch hindurch mit diesem inneren Abdeckstreifen versiegelt ist. Beim Hochreißen des äußeren Streifens reißt dieser den inneren Abdeckstreifen im Bereich des in der Papierbahn ausgestanzten Loches auf. Zahlreiche bekannte Aufreißstreifen werden beim erstmaligen Öffnen der Verpackung abgerissen und bilden Abfall. Bei anderen Aufreißstreifen hat man diese einseitig so angesiegelt, daß sie nach dem Öffnen des Loches an der Verpackung hängenbleiben. Bei keiner dieser bekannten Ausgieß- und Öffnungsvorrichtungen war ein Wiederverschließen in staubdichter oder gar flüssigkeitsdichter Form möglich.

Aus der WO 93/10967 ist eine Fließmittelpackung bekannt mit einem im wesentlichen ebenen Oberwandteilstück aus mit Kunststoff beschichtetem Trägermaterial, zum Beispiel Karton, in welchem eine Ausgleßvorrichtung angebracht ist, die ein ein Loch enthaltendes Unterteil und eine Verschließkappe aufweist. Das Loch in der Ausgießvorrichtung wird von einem Kragen außen umgeben, und die ganze Ausgießvorrichtung ist am Rand des Loches des Oberwandteilstückes durch Klebung befestigt. Der Bund und der Kragen haben bei der bekannten Verpackung den gleichen Durchmesser und liegen deshalb axial gestreckt übereinander mit dem Nachteil, daß die durch den Bund und den Kragen vorgegebene Höhe nicht verändert werden kann und aufträgt. Mit anderen Worten steht der Kragen von der Oberwand nach außen und der Bund von dieser nach innen so vor, daß die Handhabung einer mit einer solchen Ausgießvorrichtung versehenen Packungsbahn in einer Packungsherstellungsmaschine erschwert ist und ein Aufwickeln einer solchen mit einer Ausgießvorrichtung versehenen Bahn praktisch unmöglich ist.

Diese Probleme sind noch weiter verstärkt bei einer Ausgießvorrichtung anzutreffen, die aus der WO 92/00883 bekannt ist. Eine Verschließkappe ist scharnierartig mit einem Unterteil mit zwei Löchern und hochstehendem Kragen verbunden. Auf der dem aus der Oberwand weit nach oben hochstehenden Kragen gegenüberliegenden Seite ragt ein kegelstumpfartiger Bund in das Innere der Packung, so daß die Gesamthöhe der Ausgießvorrichtung schwierig zu handhaben und ein Aufwickeln einer Bahn, die mit einer solchen Ausgießvorrichtung versehen ist, unmöglich ist.

Aus der US-A-5,221,028 ist eine Fließmittelpackung bekannt, bei welcher die Seitenwände eines becherförmigen Behälters aus Kunststoff oben an ihrem Umfang mit einem scheibenförmigen Deckel aus Kunststoff (high density Polyethylen) verbunden sind. In diesem im wesentlichen ebenen Deckel, der auch als Oberwandteilstück zu verstehen ist, befindet sich ein entsprechendes Loch, welches durch eine Ausgießvorrichtung abdichtbar ist. Dies erfolgt dadurch, daß die Ausgießvorrichtung mit ihrem am Unterteil befindlichen Bund außen mit dem Loch in dem Oberwandteilstück in Schnappeingriff kommt. Durch die Verbindung zweier Kunststoffe kann auf diese Weise ein satter Festsitz geschaffen werden. Die Dichtigkeit eines solchen Sitzes ist dann in Frage gestellt, wenn das Oberwandteilstück nicht aus einem harten und festen Kunststoffmaterial hergestellt ist. In einem solchen Falle treten bei längerem Transport von Flüssigkeiten Dichtigkeitsprobleme bei der Verpackung auf.

Hinzu kommt, daß der Deckel der Ausgießvorrichtung, welcher das Loch innerhalb des Kragens des Unterteiles überdeckt, selbst bei der Berührung zweier Kunststoffe, nämlich des Deckels einerseits und des Unterteils andererseits, nicht zuverlässig dichtet, weil die gesamte Dichtung nur durch die beiden Gewinde und durch die radial äußere, horizontale Ringfläche zwischen Bund und Deckel gewährleistet werden soll. In verschiedener Hinsicht läßt also die Dichtigkeit der bekannten Verpackung zu wünschen übrig.

Aus der DE-C-41 00 542 ist eine quaderförmige Giebelpackung mit Flachdach bekannt, in deren Eckwand oben eine Ausgießvorrichtung aufgesiegelt ist. Die Ausgießvorrichtung besteht aus einem formsteifen Stutzen mit Außengewinde, auf welchen eine Verschlußkappe mit Innengewinde aufgeschraubt wird. Die Verschlußkappe übergreift außerdem einen hülsenförmigen Auszug mit axial versetzten ringförmigen Rippen, um eine formschlüssige Drehkupplung vorzusehen. Beim Abdrehen der Verschlußkappe vom Stutzen soll dadurch eine axiale Mitnahme des Auszuges gewährleistet werden.

Dichtungslippen dienen als Anschlag beim Ausziehen des Auszuges und geben bei herausgezogenem Auszug in bestimmter Position bei guter Zugkraft eine gewisse Dichtigkeit. Bei einer anderen Ausführungsform der bekannten Ausgießvorrichtung ist an der Innenseite des Oberwandteilstückes ein Flansch dichtend angesiegelt. Dieser ist über einen flexiblen, gefalteten Auszug mit dem Rand eines formsteifen Stutzens mit Außengewinde einstückig verbunden. Auf diesen ist wieder eine Verschlußkappe mit Innengewinde aufgeschraubt. Die Dichtung zwischen Verschlußkappe und formsteifen Stutzen erfolgt nur über das Gewinde oder bei vollständig heruntergeschraubter Kappe, bei welcher dann der Deckel auf die Ringfläche des Stutzens gepreßt wird. Mit Nachteil ragt der Stutzen aus dem Oberwandteilstück heraus, so daß eine praktische Herstellung und eine wenig raumaufwendige Lagerung einer Bahn, die mit einer solchen Ausgießvorrichtung versehen wäre, nicht möglich ist.

Bei Kenntnis auch dieser bekannten Ausgießvorrichtung war es nicht ohne weiteres möglich, eine Verpackung der eingangs genannten Art zu schaffen, die außerdem noch flüssigkeitsdicht ist und bei der die Ausgießvorrichtung bis zur Fertigstellung der Verpackung gut zu handhaben ist. Aufgabe der vorliegenden Erfindung ist es, die Verpackung der eingangs genannten Art mit einer verbesserten Ausgießöffnung zu versehen, die zuverlässiger flüssigkeitsdicht ist, obgleich sie vom Endverbraucher leicht geöffnet und wiederverschlossen werden kann, und insbesondere soll die Ausgießöffnung so wenig auftragen, d.h. so wenig in senkrechter Richtung aus der Oberwand herausstehen, daß eine mit der Ausgießöffnung versehene Materialbahn aus mit Kunststoff beschichtetem Trägermaterial, zum Beispiel Karton, zur Herstellung der Verpackung besser zu handhaben und zu lagern ist.

Diese Aufgabe wird erfindungsgemäß dadurch gelöst, daß der Bund radial außerhalb des Kragens angeordnet ist, zwischen dem Kragen und dem Bund ein balgartig verformbares Zwischenstück angebracht ist und die Verschließkappe radial innerhalb ihrer Außenwandung eine mit dem Kragen des Unterteiles derart in Eingriff bringbare Dichtlippe aufweist, daß sich die Dichtlippe in geschlossenem Zustand der Ausgießvorrichtung innerhalb des Kragens befindet, wobei die axiale Länge der Dichtlippe größer als die halbe axiale Länge des Kragens, aber kleiner als dessen gesamte axiale Länge ist. Die neue Verschließkappe kann vor oder nach dem Einfalten zuverlässig flüssigkeitsdicht aufgeschraubt werden, und die Dichtigkeit ist auch an der Grenze zwischen dem Unterteil der Ausgießvorrichtung und der Oberwand gewährleistet, weil das Unterteil angeschweißt ist. Anstelle bekannter Dichteinrichtungen in Linienform oder in Gestalt einer separat aufgebrachten Folie befindet sich die Dichtlippe der Verschließkappe im geschlossenen Zustand der Ausgießvorrichtung flächig innerhalb des Kragens. Die Dichtlippe nimmt nicht mehr Raum für die Ausgießvorrichtung ein, denn sie befindet sich radial innerhalb der Außenwandung der Verschließkappe. Das Vorhandensein der Dichtlippe, die in den oben blütenartig erweiterten Kragen eintaucht, verbessert wesentlich die bekannte Packung in Verbindung mit dem balgartig verformbaren Zwischenstück. Auch die angegebene Länge der Dichtlippe, die größer als die halbe axiale Länge des Kragens ist, wirkt sich günstig aus. Eine solche Dichtlippe sorgt für einen garantiert flüssigkeitsdichten Abschluß, eine Art Passung.

Die neue Verpackung mit der erfindungsgemäßen Ausgießvorrichtung erlaubt eine derart frühzeitige Anbringung an einer Materialbahn zur Herstellung einer solchen Verpackung, daß diese Bahn, insbesondere eine aus mit Kunststoff beschichtete Trägerbahn, entweder direkt in eine Packungsmaschine oder von dieser dort günstig gehandhabt wird. Eine solche Bahn kann auch zuerst auf eine Vorratsrolle gewickelt werden, um danach einer Verpackungsherstellungsmaschine zugeführt zu werden. Man erkennt die technisch einfache und günstige Herstellung einer Verpackung mit einer solchen verbesserten Ausgießöffnung. Zusätzlich erkennt man die zuverlässige Dichtigkeit der Verpackung vor und nach dem ersten Öffnen der Ausgießvorrichtung. Gleichwohl kann die Ausgießöffnung bequem wie auch die bekannte Vorrichtung geöffnet und wiederverschlossen werden.

Zweckmäßig ist es dabei gemäß der Erfindung, wenn die Verschließkappe durch ein Scharnier mit dem Unterteil verbunden ist. Zwar kann die Verschließkappe separat hergestellt und auch in einer Maschine zum Aufbringen der Ausgießvorrichtung als separates Teil auf das Unterteil aufgebracht werden, man kann die beiden Teile aber durch ein Scharnier gelenkig miteinander verbinden.

Bei weiterer vorteilhafter Ausgestaltung der Erfindung ist der Bund durch einen sich senkrecht zur Ringwandung des Bundes erstreckenden Ringflansch abgedeckt. Dieser Ringflansch kann einerseits dazu verwendet werden, die Ausgießvorrichtung an der Oberwand zu befestigen; und kann andererseits als Verbindungsring zwischen dem Bund und dem balgartig verformbaren Zwischenstück verwendet werden. Das gibt einen stabilen Aufbau, der außerdem fest in der Oberwand anbringbar ist.

Wenn ferner gemäß der Erfindung die obere Endkante des Kragens als Gießkante ausgestaltet Ist, zu der hin sich der Kragen aus der Öffnung des Loches nach außen kegelstumpfartig erweitert, lassen sich auch pastöse oder ölige Füllgüter mit guten Gießeigenschaften ausgießen. Gleichwohl leidet die Dichtigkeit unter den Maßnahmen für diese Vorteile keineswegs.

Vorteilhaft ist es gemäß der Erfindung weiterhin, wenn im eingefalteten Zustand der Ausgießvorrichtung, bei in das Loch der Oberwand eingestecktem Unterteil zwischen der äußeren Oberfläche des Kragens und der Innenfläche des Zwischenstückes ausreichend Platz für die Aufnahme einer Ringwand (Außenwandung) der Verschließkappe vorgesehen ist. Durch den Kragen In Form eines Ringkörpers wird unter Beachtung der vorstehenden Maßnahmen mit wenigen Mitteln ein Ringraum außerhalb dieses Kragens und innerhalb des Zwischenstückes, nämlich durch den ringförmigen Körper des Zwischenstückes im Abstand vom Kragen außen derart gebildet, daß in diesen Ringraum die Ringwand (Außenwandung) der Verschließkappe in jedem Zustand einbringbar Ist, sei es daß das Unterteil in das Loch der Oberwand eingesteckt ist oder sei es daß das Unterteil in axialer Richtung des Loches nach außen herausgezogen ist. Man kann die Verschließkappe also jederzeit abschrauben, denn auch das Außengewinde des Kragens erstreckt sich in diesen Raum und erlaubt auf diese Weise, die Außenwandung der Verschließkappe um den Kragen herum anzuordnen.

Die Aufgabe zur Herstellung einer Fließmittelpackung mit einer Ausgießvorrichtung der beschriebenen Art, bei welcher die Verpackung nämlich mindestens ein im wesentlichen ebenes Oberwandteilstück aus mit Kunststoff beschichtetem Trägermaterial, zum Beispiel Karton, aufweist, in welchem eine Ausgießvorrichtung angebracht ist, die ein wenigstens ein Loch enthaltendes Unterteil und einen wenigstens eine Verschließkappe enthaltenden Deckel aufweist, wobei ein Kragen das Loch außen umgibt, die Verschließkappe mit Innengewinde auf das Außengewinde des Kragens aufschraubbar ist und an dem packungsseitigen Ende des Kragens ein durch ein entsprechendes Loch in dem Oberwandteilstück zur Innenseite der Verpackung hindurchragender Bund angebracht ist, der zur Anbringung des Unterteils an dem Oberwandteilstück auf der Außen- und/oder auf der Innenfläche des Oberwandteilstücks radial außerhalb des Kragens angeschweißt ist, zwischen dem Kragen und dem Bund ein balgartig verformbares Zwischenstück angebracht ist und die Verschließkappe radial innerhalb ihrer Außenwandung eine mit dem Kragen des Unterteils derart in Eingriff bringbare Dichtlippe aufweist, daß sich die Dichtlippe in geschlossenem Zustand der Ausgießvorrichtung innerhalb des Kragens befindet, wobei die axiale Länge der Dichtlippe größer als die halbe axiale Länge des Kragens, aber kleiner als dessen gesamte axiale Länge ist, wird mit einem Verfahren gelöst, welches gemäß der Erfindung dadurch gekennzeichnet ist, daß eine Bahn aus Verbundmaterial, das gegebenenfalls auf der Innenseite der Verpackung eine Aluminiumbeschichtung enthält, nach dem Rillen zur Bildung des Loches gestanzt wird, dann eine durch Spritzgießen hergestellte Ausgießvorrichtung aus thermoplastischem Kunststoff an dem ausgestanzten Loch im Oberwandteilstück angelegt und in der nächsten Stufe angeschweißt wird, wonach die Bahn auf eine Vorratsrolle genommen wird, dann in die Pakkungsherstellungsmaschine geführt und dort zum Schlauch geformt, gefüllt und verschweißt wird. Durch den verhältnismäßig flachen Aufbau der Ausgießvorrichtung ist es möglich, diese durch Spritzgießen hergestellte Ausgießvorrichtung an einem zuvor in der Bahn aus Verbundmaterial gestanztem Loch anzulegen und anzuschweißen, um danach die Bahn auf eine Vorratsrolle zu wickeln. Man kann somit vorbereitete Verpackungsbahnen in Form von Rollen lagern oder transportieren und die Herstellungsmaschinen dadurch vereinfachen. Zum Beispiel kann eine Herstellungsmaschine die Bahn mit der Ausgießvorrichtung versehen und auf eine Rolle aufwickeln. Diese Maschine wäre dann eine Vorrichtung zur Herstellung einer bearbeiteten Bahn aus Verbundmaterial. In Rollenform kann diese Bahn danach zu einer Packungsherstellungsmaschine transportiert werden, die nur noch den Schlauch formt, das Füllgut einführt und die Verpackung durch Schweißen abdichtet.

Es ist zwar bekannt, in der Oberwand einer Verpackung eine Ausgießvorrichtung anzubringen, im Falle der Erfindung ist aber von einem Oberwandteilstück deshalb gesprochen, weil eine Oberwand aus mehreren Teilstücken aufgebaut sein kann und die Ausgießvorrichtung nur in einem ausgewählten Teilstück angebracht wird.

Die Ausgießvorrichtung der vorstehend beschriebenen Art ist zweiteilig. Es wurde aber schon erwähnt, daß sie auch einteilig dahingehend ausgestaltet sein kann, daß ein Unterteil über ein scharnierartiges Gelenk mit dem Deckel bzw. mit der Verschließkappe verbunden ist. Zum flüssigkeitsdichten Verschließen wird der Deckel mittels des Schamieres herumgeklappt und die Dichtmittel der Verschließkappe mit dem Unterteil der Ausgießvorrichtung in Eingriff gebracht.

Die Flüssigkeitsdichtigkeit der neuen Ausgießvorrichtung ergibt sich dadurch, daß die erwähnte ringförmige Dichtlippe innerhalb des Kragens unter Anlage an dessen Innenwände zu liegen kommt und eine Flächenberührung schafft. Außerdem kann die Gießkante am äußeren bzw. oberen freien Ende des Kragens gegen eine Fläche eine zusätzliche Ringdichtung schaffen.

Im Betrieb zieht man mit Hilfe eines an der Verschließkappe angelenkten Griffes den Kragen unter Herausstülpen des balgartig verformbaren Zwischenstückes axial nach außerhalb der Packung, d.h. nach oben aus dem Loch der Oberwand so heraus, daß sich der gesamte Kragen außerhalb des Loches und auch außerhalb des Bundes befindet. Dann wird die Verschlußkappe abgeschraubt, und das Loch durch das Unterteil ist offen, so daß Füllgut aus der Verpackung entleert werden kann. Desgleichen ist nach einer Teilentleerung die Ausgießvorrichtung umgekehrt wieder verschließbar.

Durch Spritzgießen kann man die zweiteilige oder auch einteilige Ausgießvorrichtung aus einem thermoplastischen Kunststoff preiswert und technisch gut beherrschbar herstellen. Der durch das Loch in dem Oberwandteilstück befindliche bzw. der durch dieses Loch hindurch ragende Bund der Ausgießvorrichtung schützt in vorteilhafter Weise die durch das Ausstanzen des Loches in der Papierbahn offenen Schnittkanten am Rand des Loches. Wenn das Füllgut eine Flüssigkeit ist, kann dieses nirgendsin offene Schnittkanten des Verbundmaterials der Verpackung eindringen und dieses zerstören.

Als Kunststoff zur Herstellung der Ausgießvorrichtung kann man Polyethylen hoher Dichte verwenden, welches auch den Geschmack bei Lebensmitteln nicht verändert und für Lebensmittel zulässig ist. Die üblichen aus mit Kunststoff beschichtetem Papier hergestellten Verpackungen können also einwandfrei mit der erfindungsgemäßen Ausgießvorrichtung versehen werden und mit Milch, Säften, Wasser, Speiseöl sowie anderen Fließmitteln gefüllt werden.

Mit dem neuen Verfahren ist es möglich, herkömmliche Verpackungsmaschinen zu benutzen und in herkömmlicher Weise Verpackungen von einer Bahn von Verbundmaterial oder auch Rollen von Verbundmaterial zu produzieren, ohne daß die Maschine sehr aufwendig wäre oder in einer Vorschaltstufe geändert werden müßte. Mit im Handel erhältlichen Maschinen können auf diese Weise 6000 Ausgießvorrichtungen oder mehr pro Stunde an ausgestanzten Löchern einer Papierbahn angebracht werden, wonach die Bahn mit entsprechender Leistung weiter betrieben werden kann.

Weitere Vorteile, Merkmale und Anwendungsmöglichkeiten der vorliegenden Erfindung ergeben sich aus der folgenden Beschreibung eines bevorzugten Ausführungsbeispieles in Verbindung mit den anliegenden Zeichnungen. Hier zeigen:
- Figur 1: eine Schnittansicht einer zweiteiligen Ausgießvorrichtung für pastöse oder ölige Füllgüter und
- Figur 2: eine Draufsicht auf das Unterteil der Ausgießvorrichtung nach Figur 1.

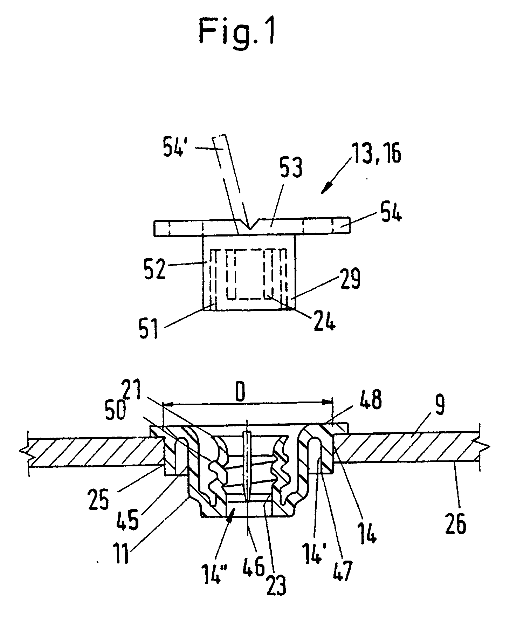

In Figur 1 sieht man unten abgebrochen im Querschnitt die Oberwand 9 einer nicht dargestellten Verpackung. In dieser Oberwand 9 ist das Unterteil 11 in einem Loch 14 der Oberwand 9 mit Hilfe des Bundes 25 eingesetzt und festgeschweißt. Im oberen Teil der Figur 1 erkennt man den Deckel 13, der als Verschließkappe 16 bezeichnet wird. Bei der hier dargestellten Ausführungsform ist die Verschließkappe 16 vom Unterteil 11 separat; es ist aber ohne weiteres denkbar, daß beide miteinander durch ein nicht dargestelltes Scharnier verbunden sind derart, daß die Verschließkappe in ähnlicher Weise gegenüber dem Unterteil bewegbar und verschwenkbar ist. Zum Beispiel kann das nicht dargestellte Scharnier an dem dem Unterteil 11 abgewandten Ende ein Loch derart haben, daß die Verschließkappe 16 in bzw. gegenüber dem Scharnier drehbar ist.

Das Unterteil 11 dieser neuen Ausgießvorrichtung weist zwischen dem Kragen 23 und dem unten im Bereich der Oberwand 9 befindlichen Bund 25 ein balgartig verformbares Zwischenstück 45 auf, durch welches das Unterteil 11 nach Herausziehen des Kragens 23 nach außen und oben insgesamt in Richtung seiner Längsmittelachse 46 länger wird. Mit anderen Worten wird durch dieses Zwischenstück 45 der Abstand zwischen der Unterkante 47 des Bundes 25 unten und der Gießkante 21 oben erheblich größer. Eine solche Ausgießvorrichtung ist besonders geeignet für pastöse oder ölige Füllgüter, z.B. Senf, Mayonnaise, Ketchup, Öl oder dergleichen. Beim Ausgießen kann nämlich dann das Füllgut die Packung nicht befeuchten bzw. nicht auf den Bereich der Oberwand 9 ohne weiteres herunterlaufen.

Der Bund 25 ist mittels Klebstoff, Verschweißung oder Hotmelt im Loch 14 der Oberwand 9 befestigt. Ein ringförmiger Flansch 48 erstreckt sich senkrecht zu der Ringwandung des Bundes 25 und deckt diesen ab. Gleichzeitig besorgt der Ringflansch 48 eine Zentrierung und Halterung am Rand des Loches 14 der Oberwand 9. Über diesen Ringflansch 48 ist das Unterteil 11 auf der Außenfläche des Oberwandteilstückes 9 angeschweißt. Dies ist die Befestigung von außen.

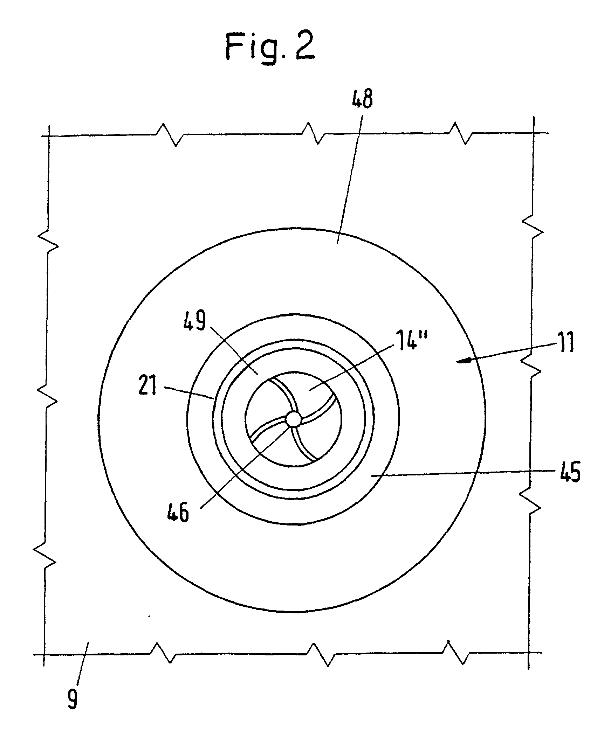

In der Draufsicht der Figur 2 blickt man auf das Unterteil 11 in der nach oben herausgezogenen Gebrauchsstellung, und man sieht von außen nach innen zunächst den erwähnten Ringflansch 48, an den sich nach innen das balgartig verformbare Zwischenstück 45 anschließt. Von oben erkennt man dann die Gießkante 21, die sich kegelstumpfartig, gegebenenfalls im Querschnitt gerundet, wie in Figur 1 dargestellt ist, nach innen auf die Öffnung des Loches 14" zusammenzieht. Der in Figur 2 dazwischen angeordnete Ring 49 ist die Innenwand des hochstehenden Kragens 23, der ein in Figur 2 nicht sichtbares, in Figur 1 im Querschnitt aber deutlich dargestelltes Außengewinde 50 trägt.

In dem eingefalteten Zustand des balgartig verformbaren Zwischenstückes 45 gemäß Darstellung der Figur 1 unten verbleibt ausreichend Platz zwischen der äußersten Oberfläche des Kragens 23 und seinem Außengewinde 50 einerseits und der Innenfläche des Zwischenstückes 45 andererseits zur Aufnahme einer Ringwand der Verschließkappe 16.

Dem Außengewinde 50 des Kragens 23 entspricht das Innengewinde 51 der Verschließkappe 16, die in Figur 1 oben dargestellt ist. Diese weist eine zylindermantelförmige Außenwandung 52 mit dem besagten Innengewinde 51 und dem Außenrand 29 auf, so daß die Verschließkappe 16 sowohl im Herstellungszustand des Unterteils 11, bei welchem das verformbare Zwischenstück 45 nach oben herausgezogen ist und die äußere Oberfläche des Zwischenstückes 45 oberhalb des Ringflansches 48 liegt und nach außen ragt, als auch im zusammengefalteten Zustand der Figur 1 auf das Außengewinde 50 des Kragens 23 aufgeschraubt werden kann. Eine Dichtlippe 24 in Zylindermantelform geringeren Durchmessers derart, daß diese im Abstand vom Innengewinde 51 der Außenwandung 52 liegt, kann beim Aufschrauben der Verschließkappe 16 auf den Kragen 23 mit dem Kragen in Dichteingriff kommen. Nach oben ist die Verschließkappe 16 durch eine Scheibe 53 geschlossen, an der auch ein Griff 54 angebracht ist, dessen Hochziehstellung in Figur 1 oben gestrichelt dargestellt und mit 54' bezeichnet ist.

Gespritzt werden sowohl die Verschließkappe 16 bei der hier dargestellten Ausführungsform aus Kunststoff wie auch das Unterteil 11; im dargestellten Ausführungsbeispiel getrennt. Das Unterteil 11 wird in nach außen gestrecktem Zustand bzw. in herausgezogener Lage des balgartig verformbaren Zwischenstückes 45 durch Spritzgießen hergestellt. Es hat dann die Gestalt der Figur 2. Die Verschließkappe 16 wird dann aufgeschraubt, das Unterteil 11 wird in das Loch 14 der Oberwand 9 eingesteckt und befestigt, und das balgartig verformbare Zwischenstück 45 wird in den eingefalteten Zustand gemäß Figur 1 unten zusammengedrückt. Dadurch ist es möglich, daß man die gesamte Öffnungsvorrichtung nach den Figuren 1 und 2 auf die mit Kunststoff beschichtete Papierbahn bringt, aus welcher später auch die Oberwand 9 gefertigt wird, wobei dann die Bahn auf eine Vorratsrolle genommen wird. Von dieser Vorratsrolle wird die Bahn mit den angebrachten Öffnungsvorrichtungen zum Tubus geformt und dann in die Packungsherstellungsmaschine geführt.

Zweckmäßig für die Ausführungsform, insbesondere für das Spritzgießen und auch die vorstehend erwähnten Merkmale und Vorteile ist die Tatsache, daß der Durchmesser des Kragens 23 erheblich kleiner als der des Bundes 25 ist. Dann kann man insbesondere das Unterteil 11 in der beschriebenen Weise zusammendrücken und den Abstand in Richtung der Achse 46 senkrecht zur Oberwand 9 gering gestalten, so daß die an der Papierbahn befestigte Ausgießvorrichtung deren Handhabung in der Packungsherstellungsmaschine nicht stört.

## Patentansprüche

1. Verpackung für Fließmittel mit wenigstens einem im wesentlichen ebenen Oberwandteilstück (9), das aus mit Kunststoff beschichtetem Trägermaterial, zum Beispiel Karton, besteht und in welchem eine Ausgießvorrichtung angebracht ist, die ein wenigstens ein Loch (14") enthaltendes Unterteil (11) und einen eine Verschließkappe (16) enthaltenden Deckel aufweist, wobei ein Kragen (23) das Loch (14") außen umgibt, die Verschließkappe (16) mit Innengewinde (51) auf das Außengewinde (50) des Kragens (23) aufschraubbar ist und an dem packungsseitigen Ende des Kragens (23) ein durch ein entsprechendes Loch (14) in dem Oberwandteilstück (9) zur Innenseite der Verpackung hindurchragender Bund (25) angebracht ist, der zur Anbringung des Unterteils (11) an dem Oberwandteilstück (9) auf der Außen- und/oder auf der Innenfläche (26) des Oberwandteilstücks (9) angeschweißt ist, **dadurch gekennzeichnet, daß** der Bund (25) radial außerhalb des Kragens (23) angeordnet ist, zwischen dem Kragen (23) und dem Bund (25) ein balgartig verformbares Zwischenstück (45) angebracht ist und die Verschließkappe (16) radial innerhalb ihrer Außenwandung (52) eine mit dem Kragen (23) des Unterteiles (11) derart in Eingriff bringbare Dichtlippe (24) aufweist, daß sich die Dichtlippe (24) in geschlossenem Zustand der Ausgießvorrichtung innerhalb des Kragens (23) befindet, wobei die axiale Länge der Dichtlippe (24) größer als die halbe axiale Länge des Kragens (23), aber kleiner als dessen gesamte axiale Länge ist.

2. Verpackung nach Anspruch 1, **dadurch gekennzeichnet, daß** die Verschließkappe (16) durch ein Scharnier mit dem Unterteil (11) verbunden ist.

3. Verpackung nach Anspruch 1 oder 2, **dadurch gekennzeichnet, daß** der Bund (25) durch einen sich senkrecht zur Ringwandung des Bundes (25) erstreckenden Ringflansch (48) abgedeckt ist.

4. Verpackung nach einem der Ansprüche 1 bis 3, **dadurch gekennzeichnet, daß** die obere Endkante des Kragens (23) als Gießkante (21) ausgestaltet ist, zu der hin sich der Kragen (23) aus der Öffnung des Loches (14") nach außen kegelstumpfartig erweitert.

5. Verpackung nach einem der Ansprüche 1 bis 4, **dadurch gekennzeichnet, daß** im eingefalteten Zustand der Ausgießöffnung bei in das Loch (14) der Oberwand (9) eingestecktem Unterteil (11) zwischen der äußeren Oberfläche des Kragens (23) und der Innenfläche des Zwischenstückes (45) ausreichend Platz für die Aufnahme einer Ringwand (Außenwandung 52) der Verschlleßkappe (16) vorgesehen ist.

6. Verfahren zur Herstellung einer Verpackung für Fließmittel mit wenigstens einem im wesentlichen ebenen Oberwandteilstück (9), das aus mit Kunststoff beschichtetem Trägermaterial, zum Beispiel Karton, besteht und in welchem eine Ausgießvorrichtung angebracht ist, die ein wenigstens ein Loch (14") enthaltendes Unterteil (11) und einen eine Verschließkappe (16) enthaltenden Deckel (13) aufweist, wobei ein Kragen (23) das Loch (14") außen umgibt, die Verschließkappe (16) mit Innengewinde (51) auf das Außengewinde (50) des Kragens (23) aufschraubbar ist und an dem packungsseitigen Ende des Kragens (23) ein durch ein entsprechendes Loch (11) in dem Oberwandteilstück (9) zur Innenseite der Verpackung hindurchragender Bund (25) angebracht ist, der zur Anbringung des Unterteils (11) an dem Oberwandteilstück (9) auf der Außen- und/oder auf der Innenfläche des Oberwandteilstücks (9) radial außerhalb des Kragens (23) angeschweißt ist, wobei zwischen dem Kragen (23) und dem Bund (25) ein balgartig verformbares Zwischenstück (45) angebracht ist und die Verschließkappe (16) radial innerhalb ihrer Außenwandung (52) eine mit dem Kragen (23) des Unterteils (11) derart in Eingriff bringbare Dichtlippe (24) aufweist, daß sich die Dichtlippe (24) in geschlossenem Zustand der Ausgießvorrichtung innerhalb des Kragens (23) befindet, wobei die axiale Länge der Dichtlippe (24) größer als die halbe axiale Länge des Kragens (23), aber kleiner als dessen gesamte axiale Länge ist, **dadurch gekennzeichnet, daß** eine Bahn (32) aus Verbundmaterial, das gegebenenfalls auf der Innenseite der Verpackung eine Alumlniumbeschichtung enthält, nach dem Rillen zur Bildung des Loches (14) gestanzt wird, dann eine durch Spritzgießen hergestellte Ausgießvorrichtung (10) aus thermoplastischem Kunststoff an dem ausgestanzten Loch (14) im Oberwandteilstück (9) angelegt und in der nächsten Stufe (41) angeschweißt wird, wonach die Bahn (32) auf eine Vorratsrolle genommen wird, dann in die Packungsherstellungsmaschine geführt und dort zum Schlauch geformt, gefüllt und verschweißt wird.

## Claims

1. A pack for fluid materials comprising at least one substantially flat upper wall portion (9) which comprises plastics-coated support material, for example cardboard, and in which there is fitted a pouring device which has a lower portion (11) including at least one hole (14") and a cover including a closure cap (16), wherein a collar (23) extends around the hole (14") on the outside thereof, the closure cap (16) can be screwed with a female screwthread (51) on to the male screwthread (50) of the collar (23) and fitted to the end of the collar (23), at the pack side, is a flange (25) which projects through a corresponding hole (14) in the upper wall portion (9) to the inside of the pack and which for the purposes of fitting the lower portion (11) to the upper wall portion (9) is welded on the outside and/or the inside surface (26) of the upper wall portion (9), **characterised in that** the flange (25) is arranged radially outwardly of the collar (23), an intermediate portion (45) which is deformable bellows-like is disposed between the collar (23) and the flange (25) and the closure cap (16), radially inwardly of the outside wall (52) thereof, has a sealing lip (24) which can be brought into engagement with the collar (25) of the lower portion (11) in such a way that, in the closed condition of the pouring device, the sealing lip (24) is disposed within the collar (23), wherein the axial length of the sealing lip (24) is greater than half the axial length of the collar (23) but less than the overall axial length thereof.

2. A pack according to claim 1 **characterised in that** the closure cap (16) is connected to the lower portion (11) by a hinge.

3. A pack according to claim 1 or claim 2 **characterised in that** the collar (25) is covered by an annular flange (48) extending perpendicularly to the annular wall of the flange (25).

4. A pack according to one of claims 1 to 3 **characterised in that** the upper end edge of the collar (23) is in the form of a pouring edge (21), towards which the collar (23) is enlarged frustoconically outwardly from the opening of the hole (14").

5. A pack according to one of claims 1 to 4 **characterised in that** in the folded-in condition of the pouring opening with the lower portion (11) fitted into the hole (14) in the upper wall (9) there is between the outer surface of the collar (23) and the inside surface of the intermediate portion (45) sufficient space for accommodating an annular wall (outside wall 52) of the closure cap (16).

6. A process for producing a pack for fluid materials comprising at least one substantially flat upper wall portion (9) which comprises plastics-coated support material, for example cardboard, and in which there is fitted a pouring device which has a lower portion (11) including at least one hole (14") and a cover (13) including a closure cap (16), wherein a collar (23) extends around the hole (14") on the outside thereof, the closure cap (16) can be screwed with a female screwthread (51) on to the male screwthread (50) of the collar (23) and fitted to the end of the collar (23), at the pack side, is a flange (25) which projects through a corresponding hole (14) in the upper wall portion (9) to the inside of the pack and which for the purposes of fitting the lower portion (11) to the upper wall portion (9) is welded on the outside and/or the inside surface (26) of the upper wall portion (9) radially outwardly of the collar (23), wherein an intermediate portion (45) which is deformable bellows-like is disposed between the collar (23) and the flange (25) and the closure cap (16), radially inwardly of the outside wall (52) thereof, has a sealing lip (24) which can be brought into engagement with the collar (25) of the lower portion (11) in such a way that, in the closed condition of the pouring device, the sealing lip (24) is disposed within the collar (23), wherein the axial length of the sealing lip (24) is greater than half the axial length of the collar (23) but less than the overall axial length thereof, **characterised in that** a web (32) of composite material which possibly includes on the inside of the pack an aluminium coating is stamped after the grooving operation to form the hole (14), then a pouring device (10) of thermoplastic material which is produced by injection moulding is applied to the stamped-out hole (14) in the upper wall portion (9) and welded in place in the next step (41), whereafter the web (32) is taken on to a supply roll, then passed into the pack-producing machine and there shaped into a tube, filled and welded.

## Revendications

1. Emballage pour produits liquides, comportant au moins une pièce partielle essentiellement plane (9) de paroi supérieure, qui est constituée d'un matériau support enduit de plastique, par exemple du carton, et dans laquelle est rapporté un dispositif verseur, qui comporte une pièce de dessous (11), contenant au moins un trou (14") et un couvercle contenant une capsule de fermeture (16), une collerette (23) entourant le trou (14") par l'extérieur, la capsule de fermeture (16) pouvant, par un filetage intérieur (51), être vissée sur le filetage extérieur (50) de la collerette (23), et un bourrelet (25) qui, en traversant un trou correspondant (14) aménagé dans la pièce partielle (9) de paroi supérieure, dépasse jusqu'à la face intérieure de l'emballage, étant rapporté à l'extrémité côté emballage de la collerette (23), bourrelet qui pour rapporter la pièce de dessous (11) à la pièce partielle (9) de paroi supérieure est soudé à la surface extérieure et/ou à la surface intérieure (26) de la pièce partielle (9) de paroi supérieure, **caractérisé en ce que** le bourrelet (25) est disposé radialement à l'extérieur de la collerette (23) ; une pièce intermédiaire (45), déformable à la manière d'un soufflet, est disposée entre la collerette (23) et le bourrelet (25), et la capsule de fermeture (16) comporte, à l'intérieur de sa paroi extérieure (52), une lèvre d'étanchéité (24), pouvant entrer en prise avec la collerette (23) de la pièce de dessous (11) de telle sorte que la lèvre d'étanchéité (24), quand le dispositif verseur est fermé, se trouve à l'intérieur de la collerette (23), la longueur axiale de la lèvre d'étanchéité (24) étant plus grande que la moitié de la longueur axiale de la collerette (23), mais étant plus petite que sa longueur axiale totale.

2. Emballage selon la revendication 1, **caractérisé en ce que** la capsule de fermeture (16) est reliée à la pièce de dessous (11) par une charnière.

3. Emballage selon la revendication 1 ou 2, **caractérisé en ce que** le bourrelet (25) est recouvert d'un collet annulaire (48), qui s'étend perpendiculairement à la paroi annulaire du bourrelet (25).

4. Emballage selon l'une des revendications 1 à 3, **caractérisé en ce que** l'arête terminale supérieure de la collerette (23) est configurée comme une arête de versement (21), vers laquelle la collerette (23) s'étend vers l'extérieur, à la manière d'un tronc de cône, à partir de l'ouverture du trou (14").

5. Emballage selon l'une des revendications 1 à 4, **caractérisé en ce que**, à l'état replié de l'orifice verseur, il est prévu, dans la pièce de dessous (11) enfichée dans le trou (14) de la paroi supérieure (9), entre la surface extérieure de la collerette (23) et la surface intérieure de la pièce intermédiaire (45), suffisamment de place pour recevoir une paroi annulaire (paroi extérieure 52) de la capsule de fermeture (16).

6. Procédé de fabrication d'un emballage pour produits liquides, comportant au moins une pièce partielle essentiellement plane (9) de paroi supérieure, qui est constituée d'un matériau support enduit de plastique, par exemple du carton, et dans laquelle est rapporté un dispositif verseur, qui comporte une pièce de dessous (11), contenant au moins un trou (14") et un couvercle (13) contenant une capsule de fermeture (16), une collerette (23) entourant le trou (14") par l'extérieur, la capsule de fermeture (16) pouvant, par un filetage intérieur (51), être vissée sur le filetage extérieur (50) de la collerette (23), et un bourrelet (25) qui, en traversant un trou correspondant (14) aménagé dans la pièce partielle (9) de paroi supérieure, dépasse jusqu'à la face intérieure de l'emballage, étant rapporté à l'extrémité côté emballage de la collerette (23), bourrelet qui, pour rapporter la pièce de dessous (11) à la pièce partielle (9) de paroi supérieure est soudé à la surface extérieure et/ou à la surface intérieure (26) de la pièce partielle (9) de paroi supérieure, où, entre la collerette (23) et le bourrelet (25) est rapportée une pièce intermédiaire (45) pouvant se déformer à la manière d'un soufflet, et la capsule de fermeture (16) présente, radialement à l'intérieur de sa paroi extérieure (52), une lèvre d'étanchéité (24) pouvant entrer en prise avec la collerette (23) de la pièce de dessous (11) de telle sorte que la lèvre d'étanchéité (24), quand le dispositif verseur est fermé, se trouve à l'intérieur de la collerette (23), la longueur axiale de la lèvre d'étanchéité (24) étant plus grande que la moitié de la longueur axiale de la collerette (23) mais étant plus petite que sa longueur axiale totale, **caractérisé en ce qu'**on découpe une bande (32) en un matériau composite, qui éventuellement sur la face intérieur de l'emballage contient un revêtement en aluminium, après le rainurage et pour former le trou (14), puis on place un dispositif verseur (10), fabriqué par moulage par injection en un matériau thermoplastique, sur le trou découpé (14) aménagé dans la pièce partielle (9) de paroi supérieure et, dans l'étape suivante (41), on la rapporte par soudage, la bande (32) étant prélevée d'une bobine d'alimentation, puis étant envoyée dans la machine à fabriquer les emballages, pour y recevoir la forme d'un tuyau, y être remplie et soudée.
